# EUROPEAN PATENT APPLICATION

(11) **EP 1 840 238 A2**
(43) Date of publication of application: **03.10.2007**
(21) Application number: 07101348.6
(22) Date of filing: 29.01.2007
(51) Int. Cl.: C23C 4/08, C23C 10/06, C23C 10/20, C23C 10/44, C23C 10/48, C23C 28/00, F01D 5/28

(54) **Oxidation-resistant coating and formation method thereof, thermal barrier coating, heat-resistant member, and gas turbine**

(30) Priority: 27.03.2006 JP 2006085928
(71) Applicant: MITSUBISHI HEAVY INDUSTRIES, LTD., Tokyo 108-8215 (JP)
(72) Inventor: Torigoe, Taiji, Takasago, Hyogo-ken 676-8686 (JP); Okada, Ikuo, Takasago, Hyogo-ken 676-8686 (JP); Yunomura, Tomoaki, Takasago, Hyogo-ken 676-8686 (JP); Oguma, Hidetaka, Takasago, Hyogo-ken 676-8686 (JP); Sakon, Toshio, Takasago, Hyogo-ken 676-8686 (JP); Kawata, Yutaka, Takasago, Hyogo-ken 676-8686 (JP)
(74) Representative: Intes, Didier Gérard André

(57) **Abstract**

The present invention provides an oxidation-resistant coating having superior oxidation resistance and superior ductility and toughness for long-term use, and a method for forming the oxidation-resistant coating. An MCrAlY layer primarily containing an MCrAlY alloy (in which M indicates at least one element of Co and Ni) is formed on a substrate formed of a heat-resistant metal by thermal spraying or EB=PVD, and subsequently, aluminum is diffused into a part of the MCrAlY layer in the thickness direction thereof from a side opposite to the substrate.

## Description

### BACKGROUND OF THE INVENTION

### 1. FIELD OF THE INVENTION

The present invention relates to an oxidation-resistant coating and a formation method thereof, a thermal barrier coating, a heat-resistant member, and a gas turbine.

### 2. DESCRIPTION OF RELATED ART

In recent years, as an energy saving measure, enhancement of the thermal efficiency of thermal power generation has been studied. In order to enhance the efficiency of a power-generating gas turbine, it is effective to increase a gas inlet temperature, up to approximately 1500°C in some cases. In order to realize a power generation plant which can be operated at a higher temperature as described above, stationary vanes, moving blades, combustor, and the like, which form the gas turbine, must be formed of heat-resistant members. However, even though the material used for the turbine blades is a heat-resistant metal, the turbine blades cannot withstand such a high temperature as mentioned above; hence, for protection from a high temperature environment, a thermal barrier coating (hereinafter referred to as a "TBC" in some cases) composed of laminated ceramic layers is formed on a substrate of the heat-resistant metal by a coating-forming method such as thermal spraying. For the ceramic layers described above, among available ceramic materials, a ZrO₂-based material, in particular, yttria-stabilized zirconia (hereinafter referred to as "YSZ" in some cases), which is ZrO₂ partially or totally stabilized by Y₂O₃, has often been used because of its relatively low thermal conductivity and relatively high coefficient of thermal expansion.

Incidentally, since the thermal barrier coating is formed of ceramic layers having different properties from those of a heat-resistant metal forming a substrate, this thermal barrier coating has some technical problems; for example, the adhesion between the substrate and the ceramic layers and the reliability of the adhesion may be mentioned. In particular, in the case of a gas turbine or the like, damage, such as spalling and/or falling off, of the ceramic layers occurs due to thermal cycling caused, for example, by stopping and starting the gas turbine. Accordingly, one method that is currently used for solving the problems described above involves forming a bond coat, composed of a metal, between the substrate and ceramic layers by thermal spraying or electron beam-physical vapor deposition (EB-PVD). In the thermal barrier coating formed by this method, the bond coat primarily decreases the difference in coefficient of thermal expansion between the substrate and a top coat formed from the ceramic layers, thereby reducing thermal stress therebetween, and as a result, the adhesion of the substrate with the ceramic layers is improved.

For this bond coat, an MCrAlY alloy (M is at least one element selected from the group consisting of Ni, Co, and Fe) having superior corrosion resistance and oxidation resistance at high temperatures is generally used; for example, a CoNiCrAlY alloy may be used (for example, see Japanese Patent No. 2977369).

In addition, for the top coat, in order to enhance thermal barrier properties and to reduce thermal impact, stabilized zirconia, which has a low thermal conductivity and a high emissivity, is primarily used; in particular, yttria-stabilized zirconia having an Y₂O₃/ZrO₂ ratio of 8/92 on a mass basis (hereinafter referred to as "8YSZ") is most frequently used because of its superior mechanical properties among ceramics.

As described above, although the MCrAlY alloy used for the bond coat of a thermal barrier coating has a high oxidation resistance, the ceramic used for the top coat, such as stabilized zirconia, allows oxygen to pass therethrough; hence it has been known that, as the thermal barrier coating is used for a long period of time, a thermally grown oxide (hereinafter referred to as "TGO") is produced on the bond coat, and an internal stress is generated in the top coat in a direction which causes spalling. Accordingly, in order to ensure long-term reliability of the thermal barrier coating, it is necessary to use a bond coat having superior oxidation resistance. One method improving the oxidation resistance of the bond coat is to increase the Al content in the MCrAlY alloy; however, in this case, the entire bond coat becomes hardened, the ductility and the toughness are degraded, and as a result, cracks may be formed in some cases.

### BRIEF SUMMARY OF THE INVENTION

The present invention provides an oxidation-resistant coating having superior oxidation resistance and superior ductility and toughness for long-term use, and a method for forming the oxidation-resistant coating. In addition, the present invention also provides a thermal barrier coating which includes the above oxidation-resistant coating and which has superior long-term reliability, a heat-resistant member, and a gas turbine.

In accordance with a first aspect of the present invention, there is provided a method for forming an oxidation-resistant coating, including a step of forming an MCrAlY layer primarily containing an MCrAlY alloy, where M indicates at least one element of Co and Ni, on a substrate formed of a heat-resistant metal by thermal spraying or EB-PVD, and a step of diffusing aluminum, with or without silicon, into a part of the MCrAlY layer in the thickness direction thereof from a side opposite to the substrate.

According to this method for forming an oxidation-resistant coating, described above, in the diffusion step, the part of the oxidation-resistant coating into which aluminum is diffused, with or without silicon, has an improved oxidation resistance. In addition, in a part of the oxidation-resistant coating other than that into which aluminum is diffused, with or without silicon, the ductility and the toughness of the MCrAlY layer are maintained.

In the diffusion step, the thickness of a diffusion layer into which aluminum is diffused, with or without silicon, is preferably set in the range of 1% to 90% of the thickness of the MCrAlY layer.

When the thickness of the diffusion layer is set in the above range, an oxidation-resistant coating can be formed which has improved oxidation resistance as well as ductility and toughness.

In accordance with a second aspect of the present invention, there is provided an oxidation-resistant coating which is formed on a substrate formed of a heat-resistant metal and which primarily includes an MCrAlY alloy, where M indicates at least one element of Co and Ni, the oxidation-resistant coating having a diffusion layer formed by diffusing aluminum, with or without silicon, into a part of the oxidation-resistant coating in the thickness direction thereof from a side opposite to the substrate.

Since it has the part into which aluminum is diffused, with or without silicon, this oxidation-resistant coating has superior oxidation resistance. In addition, a part of the oxidation-resistant coating other than that into which aluminum is diffused, with or without silicon, has ductility and toughness equivalent to those of the MCrAlY alloy.

In order to achieve oxidation resistance as well as ductility and toughness, the thickness of the diffusion layer is preferably set in the range of 1% to 90% of the oxidation-resistant coating.

In accordance with a third aspect of the present invention, there is provided a thermal barrier coating which has the oxidation-resistant coating according to the second aspect of the present invention, and a top coat which is provided on the oxidation-resistant coating at the diffusion layer side and which includes a ceramic.

Since the oxidation-resistant coating serves as a bond coat having superior oxidation resistance and superior ductility and toughness to bond the substrate to the top coat, even when the thermal barrier coating is used for a long period of time, a TGO is not likely to be produced in the bond coat. In addition, since the bond coat has good conformity with the substrate, spalling and dropping are not likely to occur, and hence long-term reliability can be realized.

In accordance with a fourth aspect of the present invention, there is provided a heat-resistant member which has a substrate formed of a heat-resistant metal, and the thermal barrier coating according to the third aspect of the present invention which is disposed so that a surface of the oxidation-resistant coating opposite to the diffusion layer is provided at the substrate side.

Even when being used for a long period of time at a high temperature, this heat-resistant member maintains superior thermal barrier effect and anti-spalling. Hence, this heat-resistant member has superior durability and a long lifetime.

In accordance with a fifth aspect of the present invention, there is provided a gas turbine including the heat-resistant member according to the fourth aspect of the present invention.

When high-temperature components such as moving blades, stationary vanes of a gas turbine unit, and a combustor are formed from the heat-resistant member according to the present invention, the temperature of working fluid of the gas turbine can be increased, and hence the efficiency thereof can be improved. In addition, since a cooling air flow rate used in the gas turbine can be decreased, the efficiency thereof is improved.

The present invention provides an oxidation-resistant coating having both superior oxidation resistance and superior ductility and toughness for long-term use, and a method for forming the oxidation-resistant coating. The thermal barrier coating according to the present invention is not likely to cause spalling and cracking and has long-term reliability. The heat-resistant member according to the present invention has superior thermal barrier effect and anti-spalling. In the gas turbine according to the present invention, since the temperature of working fluid can be increased, the efficiency of the gas turbine can be improved, and in addition, since a cooling air flow rate used in the gas turbine can be decreased, the efficiency thereof is improved.

### BRIEF DESCRIPTION OF THE SEVERAL VIEWS OF THE DRAWINGS

Fig. 1 is a schematic partial cross-sectional view showing one example of a heat-resistant member according to the present invention;
Fig. 2 is a schematic partial cross-sectional view showing one example of the heat-resistant member according to the present invention;
Fig. 3 is a schematic partial cross-sectional view showing one example of the heat-resistant member according to the present invention;
Fig. 4 is a graph showing a parabolic law of diffusion;
Fig. 5 is a perspective view showing a moving blade, which is one example of a turbine member formed from a heat-resistant member according to the present invention;
Fig. 6 is a perspective view showing a stationary vane, which is one example of a turbine member formed from a heat-resistant member according to the present invention; and
Fig. 7 is a partial cross-sectional view showing one example of a gas turbine having the gas turbine members shown in Figs. 5 and 6.

### DETAILED DESCRIPTION OF THE INVENTION

Hereinafter, embodiments of the present invention will be described with reference to the drawings.

### First Embodiment

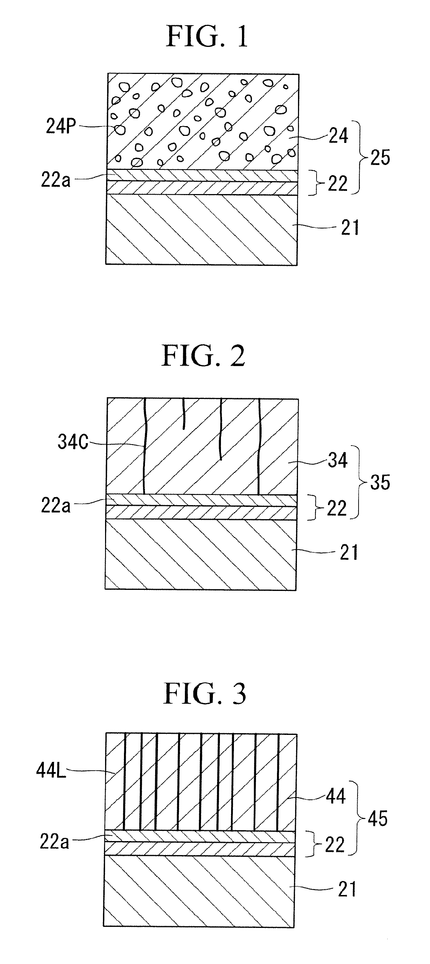

Figs. 1 to 3 are schematic partial cross-sectional views of a heat-resistant member formed according to the embodiment of the present invention.

As a heat-resistant metal used for a substrate 21 in the present invention, a heat-resistant alloy generally used for heat-resistant members may be used; in particular, a nickel-based or a cobalt-based heat-resistant alloy is suitable. For example, a nickel-based alloy IN738LC made by Inco Alloys International, Inc. may be used as a material for the substrate 21 in the present invention. The primary chemical components of IN738LC are as follows:
Ni-16Cr-8.5Co-1.75Mo-2.6W-1.75Ta-0.9Nb-3.4Ti-3.4Al (mass percent).

On the substrate 21, an MCrAlY layer primarily containing an MCrAlY alloy (in which M indicates at least one element of Co and Ni) is formed, which is to be formed into a bond coat (oxidation-resistant coating) 22 (which will be described below) by a diffusion treatment. As this MCrAlY alloy, an MCrAlY alloy used for a bond coat for a general thermal barrier coating may be used; for example, in the case of CoNiCrAlY, a compound having a Co-32Ni-21Cr-8Al-0.5Y composition (mass percent) may be used. The MCrAlY layer is formed by a standard thermal spraying method used for thermal spraying of metal materials, such as low-pressure plasma spraying (LPPS), high-velocity oxy-fuel spraying (HVOF), or atmospheric plasma spraying (APS), using an MCrAlY alloy material having a predetermined composition. The thickness of the obtained MCrAlY layer, that is, the thickness of the bond coat 22 formed in accordance with the present invention, is preferably in the range of 10 to 500 µm. When the thickness of the MCrAlY layer (bond coat 22) is less than 10 µm, the bond coat 22 becomes non-uniform, the substrate may not be fully covered with the bond coat 22, and as a result, the oxidation resistance of the thermal barrier coating may be undesirably degraded in some cases. On the other hand, when the thickness of the MCrAlY layer (bond coat 22) is more than 500 µm, cracking and spalling of the bond coat 22 are liable to occur, and in addition, the shape of the heat-resistant member finally obtained may change. Therefore, the designed performance thereof is undesirably changed.

In the present invention, after the MCrAlY layer is formed, an aluminum diffusion treatment is performed from a surface of this MCrAlY layer opposite to the substrate 21. By this treatment, a diffusion layer 22a containing aluminum thus diffused at a high concentration is formed in the MCrAlY layer at the side opposite to the substrate 21, so that the MCrAlY layer becomes the bond coat 22 of the present invention. The thickness of the diffusion layer 22a is preferably in the range of 1% to 90% of the thickness of the MCrAlY layer (bond coat 22). When the thickness of the diffusion layer 22a is less than 1% of that of the bond coat 22, a sufficient improvement in oxidation resistance may not be obtained in some cases, which is not preferable. On the other hand, when the thickness of the diffusion layer 22a is more than 90% of that of the bond coat 22, although the oxidation resistance is improved since most of the bond coat 22 is formed of the diffusion layer 22a containing aluminum, the ductility and the toughness of the bond coat 22 are undesirably degraded.

The aluminum diffusion treatment can be performed, for example, by heating the substrate 21 provided with the MCrAlY layer in a mixed atmosphere composed of aluminum chloride gas (AlCl₃) and hydrogen gas (H₂) at 700 to 1,100°C for 2 to 50 hours; by this treatment, an Al-concentrated layer (diffusion layer 22a) is formed.

The Al concentration of the aluminum diffusion layer 22a is preferably in the range of approximately 20 to 80 atomic percent in order to achieve sufficient improvement in oxidation resistance while maintaining the ductility and the toughness.

In this embodiment, when aluminum is diffused and impregnated into the bond coat 22 having superior ductility from the surface thereof opposite to the substrate so as to form the diffusion layer 22a having a high aluminum concentration in the vicinity of the surface, the oxidation resistance of the bond coat 22 is improved, and in addition, the ductility of the bond coat 22 is also simultaneously ensured since the original bond coat, which contains no aluminum diffused and impregnated thereinto and which has superior ductility, is present in the bond coat 22 at the substrate 21 side.

In the present invention, instead of the above aluminum diffusion treatment, an aluminum-silicon co-diffusion treatment may be performed. The aluminum-silicon co-diffusion treatment may be performed, for example, by repeatedly performing, several times, a process in which an aqueous phosphoric acid-based slurry containing aluminum (Al) and silicon (Si) (Al/Si = 92/8 on a mole basis) is applied to an MCrAlY layer and is then dried at approximately 350°C, followed by heating in an argon atmosphere at 700 to 1,100°C for 2 to 50 hours; by this treatment, an Al-Si concentrated layer (diffusion layer 22a) is formed.

In order to achieve sufficient improvement in oxidation resistance while maintaining the ductility and the toughness, in the diffusion layer 22a containing aluminum and silicon, the aluminum concentration is preferably in the range of approximately 20 to 80 atomic percent, and the silicon concentration is preferably in the range of approximately 2 to 50 atomic percent.

For the aluminum-silicon co-diffusion treatment, aluminum and silicon may be simultaneously diffused and impregnated, as described above. Alternatively, aluminum and silicon may be separately diffused and impregnated. However, in consideration of the number of steps and the cost, the treatment in which aluminum and silicon are simultaneously diffused and impregnated is preferable.

In this embodiment, when aluminum and silicon are diffused and impregnated into the bond coat 22 having superior ductility from the surface thereof opposite to the substrate 21 so as to form the diffusion layer 22a having high aluminum and silicon concentrations in the vicinity of the surface, the oxidation resistance of the bond coat 22 is improved, and in addition, the ductility of the bond coat 22 is also simultaneously ensured since the original bond coat, which contains no aluminum and no silicon diffused and impregnated thereinto and which has superior ductility, is present in the bond coat 22 at the substrate 21 side. The oxidation rate of the bond coat 22 processed by the aluminum-silicon co-diffusion treatment is decreased by approximately 10% as compared to that of the bond coat 22 processed by the above aluminum diffusion treatment.

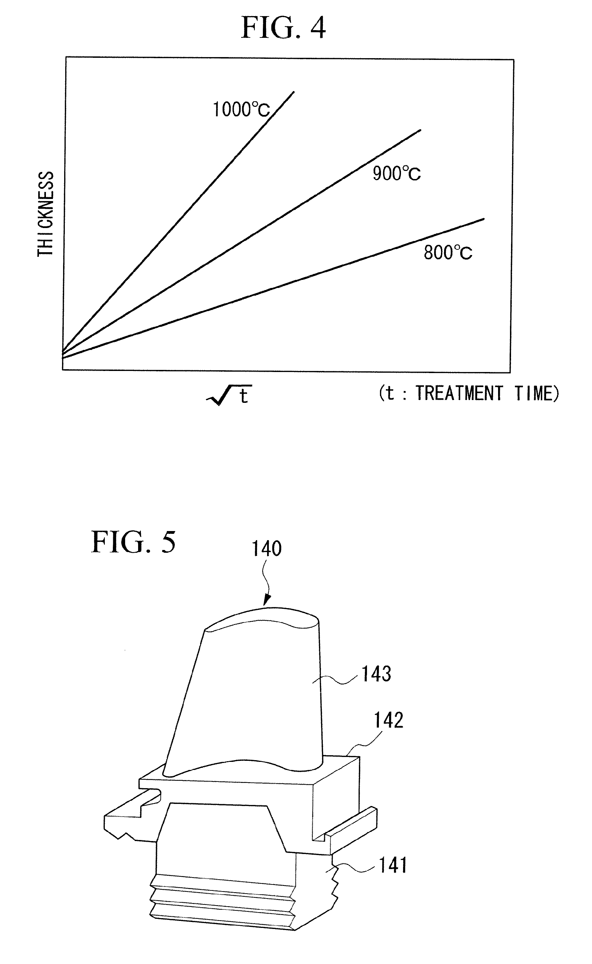

In the aluminum diffusion treatment and the aluminum-silicon co-diffusion treatment, the thickness of the diffusion layer 22a is determined in accordance with a parabolic law of the diffusion treatment, shown in Fig. 4. Temperatures on lines indicate respective treatment temperatures of the diffusion treatment.

Accordingly, in the aluminum diffusion treatment and the aluminum-silicon co-diffusion treatment, the thickness of the diffusion layer 22a can be controlled in the range described above when the treatment conditions are selected in accordance with the parabolic law.

On the bond coat 22 thus formed at the diffusion layer 22a side, a top coat 24, 34, or 44 is formed, so that a thermal barrier coating 25, 35, or 45 having superior oxidation resistance is formed, respectively.

As the top coats 24, 34, and 44, for example, a zirconia-based ceramic or a composite oxide-based ceramic may be used.

One example of the zirconia-based ceramic is zirconia containing a rare earth oxide as a stabilizer; for example, ZrO₂·8%Y₂O₃, ZrO₂·16%Yb₂O₃, and ZrO₂·15.5%Er₂O₃ may be used (in which % indicates the mass ratio of the rare earth oxide to the total of zirconia and the rare earth oxide). ZrO₂·8%Y₂O₃ is a material which has been widely used as a top coat of thermal barrier coatings. ZrO₂·16%Yb₂O₃ and ZrO₂·15.5%Er₂O₃ both have an effect of improving high temperature crystalline stability at high temperature.

In addition, as the composite oxide-based ceramic, various composite oxides which are used or proposed as top coats of the thermal barrier coating may be used, for example, a zirconate compound, such as Sm₂Zr₂O₇, SmYbZr₂O₇, or Gd₂Zr₂O₇. The zirconate compound, such as Sm₂Zr₂O₇, SmYbZr₂O₇, or Gd₂Zr₂O₇, has low thermal conductivity and, in addition, superior high-temperature stability.

The top coats 24, 34, and 44 are formed by a standard method used for forming top coats of the thermal barrier coatings, for example, atmospheric plasma spraying (APS) or electron-beam physical vapor deposition (EB-PVD). By the methods mentioned above, the top coat 24 having pores 24P, as shown in Fig. 1, the top coat 34 having vertical cracks 34C, as shown in Fig. 2, and the top coat 44 having columnar crystals 44L, as shown in Fig. 3 may be formed.

The top coat 24 having the pores 24P can be formed by atmospheric plasma spraying. In this case, the top coat 24 preferably has a pore ratio (which is the ratio of the volume of the pores formed in the top coat 24 to the volume of the top coat 24) in the range of 1% to 30%. By the presence of the pores, besides improvement in thermal barrier properties of the top coat 24, since the Young's modulus is decreased, the stress can be reduced even when a high thermal stress is applied to the top coat 24 caused by thermal cycling. Accordingly, the thermal barrier coating 25 having superior heat cycle durability can be realized.

When the pore rate is less than 1%, the Young's modulus is increased because of a dense structure, and when a thermal stress is increased, spalling is liable to occur. In addition, when the pore rate is more than 30%, the adhesion with the bond coat 22 becomes insufficient, and hence the durability is liable to be degraded.

The pore rate of the top coat can be easily controlled when the spraying conditions are adjusted, and hence a ceramic layer having an appropriate pore rate can be formed. Controllable thermal spraying conditions include, for example, a spraying current, a plasma gas flow rate, and a spraying distance.

When the spraying current is decreased, for example, from 600 A, which is the usual current, to 400 A, the pore rate can be increased from approximately 5% to 8%. In addition, by increasing the current, the pore rate can also be decreased.

When the ratio of plasma gas flow rate of Ar to that of H₂ is changed, for example, from 35/7.4 (1/min), which is the usual Ar/H₂ ratio, to 37.3/5.1 (1/min), the pore rate can be increased from approximately 5% to 8%. In addition, by increasing the hydrogen flow rate, the pore rate can be decreased.

When the spraying distance is increased, for example, from 150 mm, which is the usual distance, to 210 mm, the pore rate can be increased from approximately 5% to 8%. In addition, by decreasing the spraying distance, the pore rate can also be decreased. Furthermore, when the above parameters are changed in combination, the pore rate can be changed in the range of approximately 1% to up to 30%.

The top coat 34 having the vertical cracks 34C can also be formed by atmospheric plasma spraying. The vertical cracks 34C are intentionally formed when the top coat 34 is formed in order to improve the spalling resistance thereof.

When thermal cycling caused by starting and stopping of a turbine is applied to the top coat 34 made of a ceramic having a coefficient of thermal expansion smaller than that of the substrate 21 or the bond coat 22, both of which are made of heat-resistant metals, a stress generated due to the difference in coefficient of thermal expansions between the top coat 34 and the substrate 21 and/or the bond coat 22 acts on the top coat 34; however, the top coat 34 is designed so as to reduce the stress by increasing or decreasing the widths of the vertical cracks 34C.

Accordingly, almost none of the stress generated by expansion and contraction caused by the thermal cycling is applied to the top coat 34 itself, and the top coat 34 is very unlikely to be spalled away; hence, the thermal barrier coating 35 having superior thermal-cycling durability can be obtained.

According to the present invention, when thermal spraying is performed using a spraying powder, the vertical cracks 34C can be formed in the top coat 34. The coating formation by a thermal spraying method is performed by spraying a powder in a molten or a semi-molten state onto the bond coat 22 on the substrate 21, followed by rapid cooling and solidification. Solidification cracks are intentionally generated in the top coat 34 to be formed by increasing the difference in temperature during solidification, so that the vertical cracks 34C can be formed in the top coat 34.

In a thermal barrier coating having a related structure, cracks formed in the top coat cause spalling thereof; however, the cracks 34C formed in the top coat 34 according to the present invention do not cause spalling. The reason for this is that the vertical cracks 34C and the cracks generated by thermal cycling have different crystalline structures in the vicinities thereof. That is, the cracks generated by thermal cycling are formed as described below. For example, in the case in which the top coat is formed of a zirconia-based ceramic, the crystalline phase of ZrO₂ is changed at a high temperature from a t' phase (metastable tetragonal phase) to a t phase (tetragonal phase) and a C phase (cubic phase), and when the temperature of the thermal barrier coating material is decreased, the t phase, which is stable at a high temperature, is changed to an m phase (monoclinic phase) and a C phase (cubic phase), and the cracks are formed by the change in volume when the m phase is generated. By this change in volume, the m phase is observed in the vicinities of the cracks. Hence, the phase transition between the m phase and the t phase occurs repeatedly by thermal cycling, the cracks gradually grow, and eventually, the top coat is spalled away.

On the other hand, in the vertical cracks formed in the top coat 34 according to the present invention, since the m phase is not substantially present in the vicinities of the cracks, the change in volume caused by the phase transition is not substantially observed in the top coat 34 during thermal cycling, and hence the vertical cracks 34C do not substantially grow by the change in temperature caused by thermal cycling. Accordingly, it is believed that the lifetime of the top coat 34 cannot be decreased by the vertical cracks 34C thus formed.

The extending direction of the vertical cracks 34C with respect to the normal to the coating surface is preferably set to be ±40° or less. Since cracks along the surface of the top coat 34 are liable to cause spalling of the top coat 34, the extending direction of the vertical cracks 34C is preferably set to be as parallel as possible to the normal to the coating surface of the top coat 34. However, when the extending direction with respect to the normal to the coating surface is ±40° or less, spalling of the top coat 34 can be sufficiently prevented.

The extending direction of the vertical cracks 34C is more preferably set to be ±20° or less with respect to the normal to the coating surface.

The distance (pitch) between the vertical cracks 34C of the top coat 34 is preferably set in the range of 5% to 100% of the total coating thickness formed on the heat-resistant substrate (excluding the bond coat 22). For example, when the thickness of the top coat 34 is set to 0.5 mm, the distance between the vertical cracks 34C is preferably set in the range of 0.025 to 0.5 mm. When the vertical cracks 34C are formed in the top coat 34 with the pitches as described above, the thermal barrier coating 35 which includes the top coat 34 having superior spalling resistance can be formed.

When the pitch is less than 5%, since a bonding area of the top coat 34 to the underlying bond coat 22 is decreased, the adhesion is insufficient, and as a result, spalling may be liable to occur in some cases. On the other hand, when the pitch is more than 100%, the stress in a spalling direction at the front end of the crack is particularly increased, which may cause spalling in some cases.

The top coat 34 having the vertical cracks 34C can be formed by thermal spraying or electron-beam physical vapor deposition when the top coat 34 is formed.

When forming the top coat 34 having the vertical cracks 34C by thermal spraying, when the spraying distance (distance between a spraying gun and the bond coat 22 on the substrate 21) is decreased to approximately one fourth to two thirds of that used for forming a zirconia coating of the related art, or when the electrical power supplied to the spraying gun is increased by approximately 2 to 25 times that which has been used conventionally while the spraying distance is maintained approximately equivalent to that used heretofore, the vertical cracks 34C can be formed in the top coat 34. That is, when the temperature of particles in a molten or a semi-molten state flying to the substrate 21 provided with the bond coat 22 is increased, the temperature gradient is increased when quenching and solidification of the particles are performed on the substrate 21; as a result, the vertical cracks 34C can be formed by contraction during the solidification. According to the method described above, by adjusting the spraying distance and/or the electrical power input to the spraying gun, the distance and the frequency of the vertical cracks 34C (area density of the vertical cracks 34C) can be easily controlled, and hence the top coat 34 having desired properties can be formed. As a result, the thermal barrier coating 35 having superior anti-spalling and thermal-cycling durability can be easily formed.

When forming the top coat 34 having the vertical cracks 34C by electron beam physical vapor deposition, using an electron beam deposition apparatus manufactured by Ardennes (e.g., TUBA150) and using an ingot formed from a predetermined raw material as a target material for the top coat 34 under typical conditions (electron beam output of 50 kW, atmospheric pressure of 10⁻⁴ torr, and heat resistance substrate

temperature of 1,000°C), the top coat 34 having vertical cracks 34C can be easily formed.

The top coat 44 having the columnar crystals 44L can be formed by electron beam physical vapor deposition.

The columnar crystals 44L are crystals which have nuclei generated on the surface of the bond coat 22 and which are grown from the nuclei to form single crystals in a preferential crystalline growth direction. Even when a strain is applied to the substrate 21 made of a heat-resistant metal, since the columnar crystals 44L are separated from each other, the top coat 44 and the thermal barrier coating 45 show high durability.

In this embodiment, a configuration is described in which the oxidation-resistant coating of the present invention is used as the bond coat 22 for bonding the substrate 21, formed of a heat-resistant metal, to the top coat 24, 34, or 44, and in which the thermal barrier coating 25, 35, or 45 is formed using the top coat 24, 34, or 44, respectively, on the bond coat 22. However, the present invention is not limited to the configuration described above. For example, when a member to be formed is used in a relatively low-temperature place, and hence the thermal barrier coating is not required, the bond coat 22 described in this embodiment may be used as an oxidation-resistant coating without forming the top coat 24, 34, or 44.

### Experimental Example

By using a sample made of a substrate and a CoNiCrAlY layer having a thickness of approximately 100 µm formed thereon by low pressure plasma spraying (LPPS), the effects of the aluminum diffusion treatment and the aluminum-silicon co-diffusion treatment were investigated. A sample having the CoNiCrAlY layer, without being processed by the diffusion treatment, was named sample 1, a sample which was processed by the aluminum diffusion treatment described in the first embodiment, by way of example, and which had a diffusion layer having a thickness of approximately 50 µm was named sample 2, and a sample which was processed by the aluminum-silicon co-diffusion treatment described in the first embodiment, by way of example, and which had a diffusion layer having a thickness of approximately 50 µm was named sample 3.

Each sample was heated to 1,000°C for 3,000 hours in air, and the thickness of an oxide scale formed by oxidation of the CoNiCrAlY layer was measured. The thicknesses of samples 1, 2, and 3 were 12, 6, and 4 µm, respectively.

It was found that samples 2 and 3, which were processed by the aluminum diffusion treatment and the aluminum-silicon co-diffusion treatment, respectively, had a an oxide scale having a thickness smaller than that of sample 1, which was not processed by the diffusion treatment. The oxidation resistance of the CoNiCrAlY layer of samples 2 and 3 was found to be superior to that of sample 1. In addition, it was found that the thickness of the oxide scale of sample 3, which was processed by the aluminum-silicon diffusion treatment, was smallest, and that the oxidation resistance of the CoNiCrAlY layer of sample 3 was most superior. It is known, in general, that the oxidation properties of a bond coat have a large influence on spalling of a top coat including a ceramic of a thermal barrier coating (hereinafter referred to as "TBC" in some cases). Hence, when this oxide scale is grown thick, the top coat is liable to be spalled away. In the case of a bond coat processed by the Al diffusion treatment or the Al-Si co-diffusion treatment according to the present invention, since the oxide growth rate of the bond coat is slow as compared to that of a standard bond coat, and the spalling life of a TBC having a top coat is increased, the present invention can provide a thermal barrier coating having superior thermal-cycling durability and a long lifetime.

### Second Embodiment

The thermal barrier coating of the present invention is effectively applied to high-temperature components of industrial gas turbines, such as moving blades and stationary vanes of gas turbine units, and combustors. In addition, besides the components of industrial gas turbines, the thermal barrier coating of the present invention may also be applied to high-temperature components of engines of automobiles, jet planes, and the like. When the components mentioned above are covered with the thermal barrier coating of the present invention, gas turbine members and high-temperature components having superior thermal-cycling durability can be obtained.

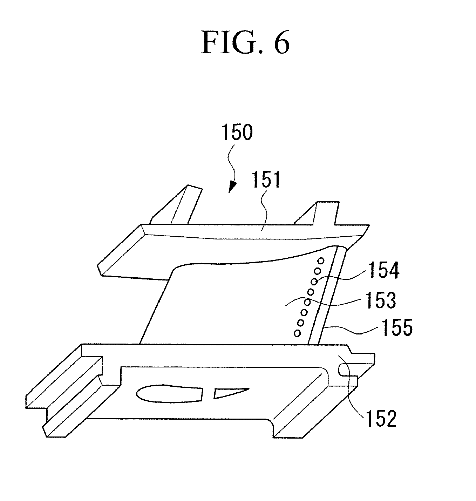

Figs. 5 and 6 are perspective views each showing an example of a turbine blade (turbine member) to which the thermal barrier coating of the present invention is applicable. A gas turbine moving blade 140 shown in Fig. 5 is formed of a tab tail 141, which is to be fixed at a disc side, a platform 142, a blade portion 143, and the like. In addition, a gas-turbine stationary vane 150 shown in Fig. 6 is formed of an inner shroud 151, an outer shroud 152, an airfoil portion 153, and the like, and the blade portion 153 has seal fin cooling holes 154, a slit 155, and the like formed therein.

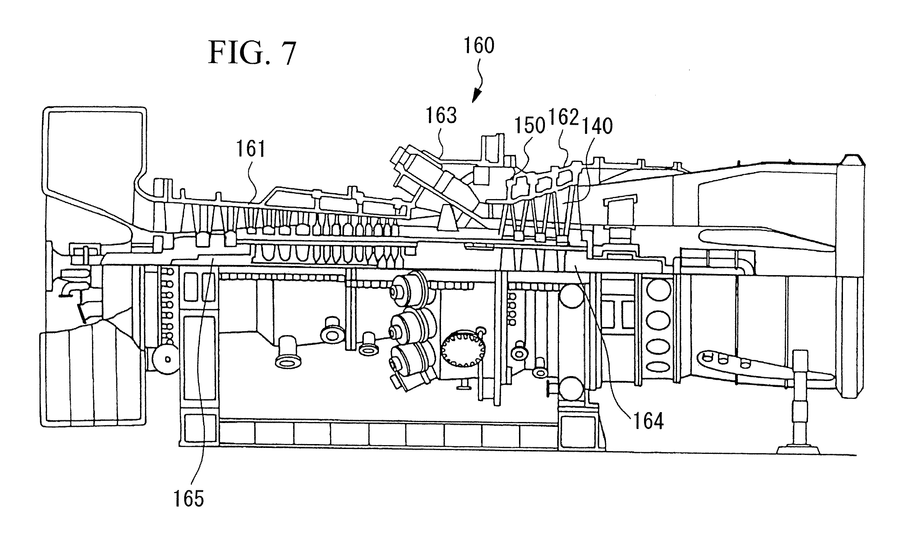

A gas turbine to which the turbine blades 140 and 150 shown in Figs. 5 and 6, respectively, are applicable will be described with reference to Fig. 7. Fig. 7 is a schematic view showing a partial cross-sectional structure of a gas turbine according to the present invention. A gas turbine 160 has a compressor 161 and a turbine 162 directly connected thereto. The compressor 161 is formed as an axial-flow compressor which takes in air or a predetermined gas as a working fluid from an intake port and increases the pressure of the fluid. A combustor 163 is connected to a discharge port of this compressor 161, and the working fluid discharged from the compressor 161 is heated to a predetermined turbine inlet temperature by the combustor 163. Subsequently, the working fluid heated to a predetermined temperature is then supplied to the turbine 162. As shown in Fig. 7, in a casing of the turbine 162, the above gas-turbine stationary vanes 150 are provided to form several stages (four stages in Fig. 7). In addition, the above gas-turbine moving blades 140 are fixed to a main shaft 164 to form stages paired with the respective stationary vanes 150. On end of the main shaft 164 is connected to a rotating shaft 165 of the compressor 161, and the other end is connected to a rotating shaft of a generator (not shown).

According to the structure described above, when a high-temperature, high-pressure working fluid is supplied in the casing of the turbine 162 from the combustor 163, since the working fluid is expanded in the casing, the main shaft 164 is rotated, so that the generator (not shown) connected to the gas turbine 160 is driven. That is, the pressure is decreased by the stationary vanes 150 fixed in the casing, and kinetic energy generated thereby is converted to rotational torque via the moving blades 140 fixed to the main shaft 164. Subsequently, the rotational torque thus generated is transmitted to the rotating shaft 165, and the generator is driven thereby.

When a heat-resistant member formed by providing the thermal barrier coating of the present invention on a substrate formed of a heat-resistant metal is used as a turbine blade, since a turbine blade having a superior thermal barrier effect and spalling resistance is obtained, a turbine blade which can be used under higher-temperature conditions and which has superior durability and longer lifetime can be realized. In addition, operation performed under the higher-temperature conditions indicates that the temperature of a working fluid can be increased, and hence, the gas turbine efficiency can be improved. In addition, since the heat-resistant member of the present invention has superior thermal barrier properties, a cooling air flow rate used for the gas turbine can be decreased, and hence the performance of the gas turbine can be improved.

Besides gas turbines, the heat-resistant member of the present invention can be applied, for example, to piston crowns of diesel engines and components of jet planes.

## Claims

1. A method for forming an oxidation-resistant coating, **characterized in that** it comprises:
a step of forming an MCrAlY layer (22) primarily containing an MCrAlY alloy, where M indicates at least one element of Co and Ni, on a substrate (21) formed of a heat-resistant metal by thermal spraying or electron beam-physical vapor deposition; and
a step of diffusing aluminum into a part (22a) of the MCrAlY layer in the thickness direction thereof from a side opposite to the substrate.

2. The method for forming an oxidation-resistant coating, according to Claim 1, **characterized in that** the diffusion step is a step of diffusing silicon and the aluminum into a part (22a) of the MCrAlY layer in the thickness direction thereof from the side opposite to the substrate (21).

3. The method for forming an oxidation-resistant coating, according to Claim 1, **characterized in that**, in the diffusion step, the thickness of a layer (22a) into which the aluminum is diffused is in the range of 1% to 90% of the thickness of the MCrAlY layer (22).

4. The method for forming an oxidation-resistant coating, according to Claim 2, **characterized in that**, in the diffusion step, the thickness of a layer (22a) into which the aluminum and the silicon are diffused is in the range of 1% to 90% of the thickness of the MCrAlY layer (22).

5. An oxidation-resistant coating (22) which is formed on a substrate (21) formed of a heat-resistant metal and which primarily includes an MCrAlY alloy, where M indicates at least one element of Co and Ni, the oxidation-resistant coating **characterized in that** it comprises:
a diffusion layer (22a) formed by diffusing aluminum into a part of the oxidation-resistant coating in the thickness direction thereof from a side opposite to the substrate.

6. The oxidation-resistant coating (22) according to Claim 5, **characterized in that** the diffusion layer (22a) is a layer formed by diffusing silicon and the aluminum into a part of the oxidation-resistant coating in the thickness direction thereof from the side opposite to the substrate.

7. The oxidation-resistant coating (22) according to Claim 5 or 6, wherein the thickness of the diffusion layer (22a) is in the range of 1% to 90% of the thickness of the oxidation-resistant coating.

8. A thermal barrier coating **characterized in that** it comprises:
the oxidation-resistant coating (22) according to one of Claims 5 to 7, and
a top coat (24) which is provided on the oxidation-resistant coating at the diffusion layer (22a) side and which includes a ceramic.

9. A heat-resistant member **characterized in that** it comprises:
a substrate formed of a heat-resistant metal, and
the thermal barrier coating according to Claim 8, which is disposed so that a surface of the oxidation-resistant coating (22) opposite to the diffusion layer (22a) is provided at the substrate (21) side.

10. A gas turbine comprising:
the heat-resistant member according to Claim 9.
